# EUROPEAN PATENT SPECIFICATION

(11) **EP 3 205 487 B1**
(45) Date of publication and mention of the grant of the patent: **03.07.2019**
(21) Application number: 17155006.4
(22) Date of filing: 07.02.2017
(51) Int. Cl.: B29D 7/01, B32B 17/10, C08J 5/22, C09D 129/14, C03C 17/34

(54) **METHOD FOR PRODUCING FILMS BASED ON PLASTICIZED POLYVINYL ACETAL BY COATING**
VERFAHREN ZUR HERSTELLUNG VON FOLIEN AUF BASIS VON WEICHPOLYVINYLACETAL DURCH BESCHICHTUNG
PROCÉDÉ DE PRODUCTION DE FILMS À BASE D'ACÉTAL DE POLYVINYLE PLASTIFIÉ PAR REVÊTEMENT

(30) Priority: 15.02.2016 EP 16155704
(43) Date of publication of application: 16.08.2017
(73) Proprietor: Kuraray Europe GmbH, 65795 Hattersheim (DE)
(72) Inventor: Kisters, Michael, Dr, D-53840 Troisdorf (DE)
(74) Representative: Kisters, Michael Marcus

(56) References cited:
- EP-A1- 2 905 127
- WO-A1-2005/090054
- WO-A1-2014/158786

## Description

### Technical Field

The present invention relates to a method to produce films based on plasticized polyvinyl acetal by coating or printing

It is long known in various variants to produce interlayer films based on plasticized polyvinyl acetal by extrusion. Common for these extrusion processes is that a melt comprising plasticized polyvinyl acetal, usually polyvinylbutyral, is extruded through a thin die to produce a melt film. The shape of this melt film is then fixed or "frozen" by cooling in air and/or water. The film is then stored and shipped in rolls.

At the laminating site, the film is un-winded from roll, cut into the final form and placed between glass sheets to produce the final glass laminate.

In other words, the film is shaped by the extrusion process. Due to the high shear rates during extrusion, such films are subject to relaxation processes which result in unwanted changes in thickness and shape. Extruded films have a tendency for neck-in and wrinkles, i.e. reducing flatness and width for increased thickness at the edges.

Accordingly, it was the object of the invention to provide an alternative to the known extrusion processes to produce films based on plasticized polyvinyl acetal.

Document WO2014/158786-A1 discloses multilayers of plasticised polyvinyl acetal.

Document EP2905127-A1 discloses bilayers made of two different polyvinyl acetal layers. WO2005/090054-A1 discloses co-extrusion of plasticised polyvinyl acetal melts.

### Object of the invention

The invention therefore relates to a method for producing a film as described in claim 1 and in the preferred embodiments of claims 2-7.

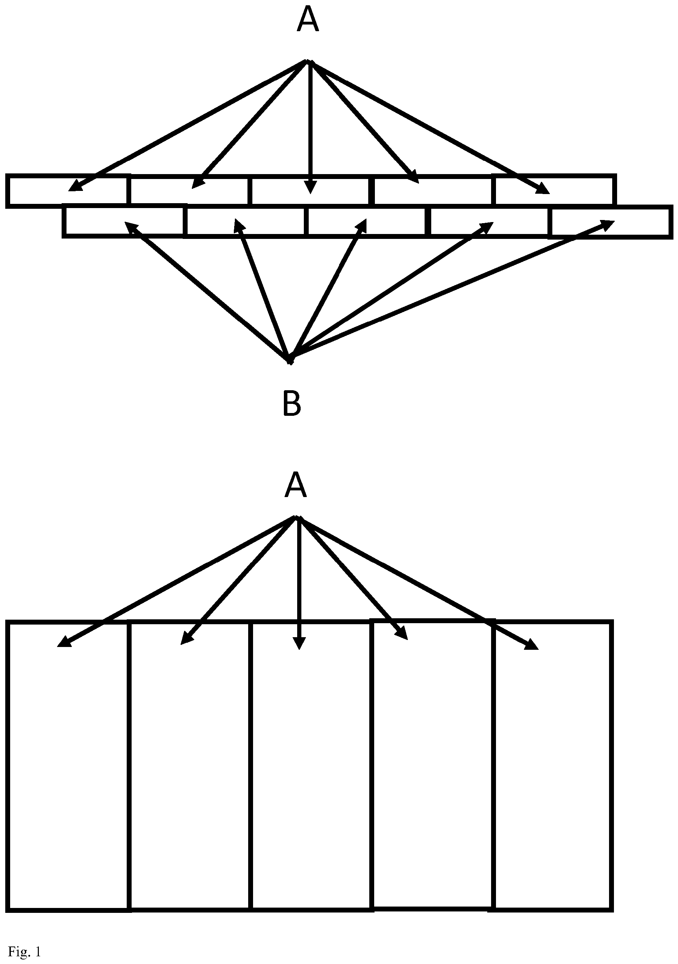

The coating of the strings is performed parallel to each other without spacing. Fig. 1 shows in side and top view a film of the invention consisting of two layers provided by strings made from melts A and B. The scale of the drawing is not proportional as the string may have a smaller width and thickness. The strings may be rectangular when coated, but can also be round-shaped as long as the stings fuse with each other to yield a two-dimensional layer.

In the method of the invention, the strings of a layer are coated adjacent to each other at a temperature where they fuse with each other and the strings of a layer are coated adjacent to each other at a temperature where they fuse with the adjacent layer.

The term "fuse" refers to a process where different strings or layers form an inseparable unit substantially without voids or optical visible surfaces. Fusing of strings or layers works best at a temperature near the Tg of the layers/strings to be fused, for example in a range of (Tg - 20 K) to (Tg + 20 K) of the strings or layers.

Thereby, layers and in the final product, films without voids of optical disturbances are obtained.

### Detailed description

The strings should have a width as broad as possible. In best case, only two strings having in combination the width of the final laminated glass is used for coating. In this variant, the string may have a width of 20 cm to 2 m. In another variant, a plurality of strings like 10 to 1000 are coated adjacent and in parallel to each other are used. In such cases, the strings may be as small as possible to yield after fusing a smooth surface, preferable with a width of 0,1 to 20 cm, more preferable with a width of 0,1 to 1 cm.

The strings are coated in parallel and adjacent to each other to provide a layer. The coating process of the invention may involve a plurality of layers, depending on the thickness of the layers and the desired final thickness of the interlayer film. A string or a layer may have a thickness of 0.01 to 1 mm, preferable 0.1 to 0,3 mm.

The coating step on the first layer can be repeated as often as necessary to achieve the desired thickness of the film. Within the method of the invention, the number of layers is not particular limited and depends on the desired thickness of the film. In practice, the number of layers is between 2 and 30, preferable between 2 and 10, and especially between 3 and 5.

The strings of different layers may be coated substantially directly on each other, i.e. share an angle of substantially 0°. In another embodiment, the strings of different layers share an angle of 1 to 90°. Preferable, strings of different layers are coated orthogonal to each other.

The strings are produced from the melt by extrusion or 3D printing techniques like fused deposition modelling or ink-jet printing known to a person skilled in the art. The terms "coating" and "printing" are used synonymous in the invention.

However, different to the known extrusion processes, the film produced with the method of the invention is not extruded in its final shape and thickness but needs to be combined with other parts (strings) to form a film. In other words, film shaping and/or film forming according to the present invention is not a part of the extrusion process.

In another embodiment, the coating of a plurality of strings of at least one layer is interrupted in one or more locations, thereby providing the layer with at least one opening.

With this embodiment, areas in a layer or the film can be created which may be filled with other materials or composition that the surrounding layer. Preferable, such openings of a layer are coated with strings of a melt having a different composition as the strings from which the layer is provided.

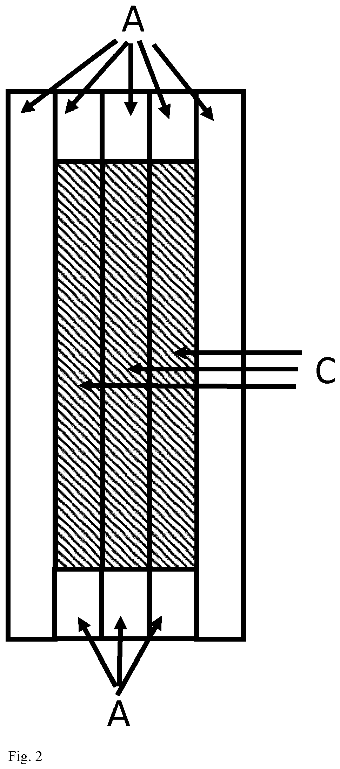

In another embodiment of the invention, in at least one layer, at least two strings provided from different melts are coated successively to be combined to the length of the film. Fig. 2 shows by way of example and not in scale a layer of a film provided by successively coated strings from melt A and C.

For example, such layers may be utilized to "frame" a moisture sensitive inner area provided from a melt C by a moisture resistant outer area provided from a melt A. The successively coated strings may furthermore have different composition besides the polyvinylacetal and plasticizer, like the presence and absence of pigments or additives like UV absorber, optical brighteners or fluorescent additives, colorants, inorganic or organic nanoparticles and/or pyrogenic silicic acid.

The layers of the film may be provided from strings from at least two melts comprising different polyvinyl actetal and/or different plasticisers. In this embodiment, the strings of a first layer are provided from the same melt, i.e. have the same composition, but the strings of a second layer are provided from a different melt. In other words, the resulting layers have different composition. This embodiment can be used for example to produce so called sound-damping films which consist of layers with different mechanical properties. For example, in Fig. 1, the layer coated from strings A may consist from a harder material that the layer coated from strings B.

In another embodiment, the film comprises at least one layer provided from a plurality of strings wherein the strings are provided from at least two melts having a different composition. In this embodiment, the strings of a layer are provided from different melts, i.e. the resulting layer has a different composition over its area. This embodiment can be used for example to produce so called shaded-band films having coloured and transparent regions. By suitable choice of the composition of the strings, the coloured region may fade out into the transparent region. Such films may be used in windshields for car and busses.

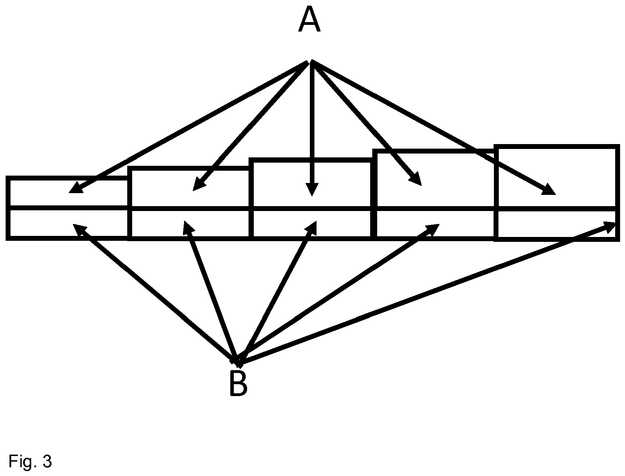

The layers may have the same or a different thickness. The thickness of a layer may be constant over the surface of the interlayer film, i.e. the surfaces of the layer are plane-parallel. In another embodiment, one or more layers may have an uneven thickness or a thickness profile as seen over the surface of the layer and/or the final film. For example, some or all layers may be provided with a wedge-shaped thickness over the surface of the layer and/or the final film, which is useful for HUD applications. An uneven thickness or a thickness profile is easily provided by coating strings with a different thickness (increasing or decreasing) adjacent to each other. Fig. 3 shows by way of example and not in scale a film having a non-even thickness profile provided by strings having different thickness.

Especially for windshield applications, an interlayer film needs to be stretched into a curved shape. In another embodiment of the invention intended to produce films having a curved shape, the strings are coated in a curve according to required shape of the final film.

This embodiment is especially useful for producing interlayer films for windshields without trimming or stretching the film into a curved shape. In addition, it is possible to coat a shaded band by coating tinted or dyed strings along the upper, curved edge. Fading out the dye is possible by coating strings with decreasing concentration of dye in the respective melt.

The surface on which the first layer is coated may have surface structure with a roughness Rz of 15 to 150 µm, preferably Rz of 15 to 100 µm, more preferably Rz of 20 to 80 µm, and in particular Rz of 40 to 75 µm. With the method of the invention, this surface structure is embossed or casted into the first layer.

In this embodiment, the interlayer film is removed from the surface after the last layer was coated. In order to reduce adhesion of the interlayer film to the surface, it is preferred to cool the interlayer on the surface to a temperature of -10° to +20°C and/or to provide an anti-adhesion coating to the rough surface.

In an alternative embodiment, the surface on which the first layer is coated may be a surface with no or nearly no roughness like a glass sheet. Preferable, the glass sheet used as surface is the glass sheet intended for the final laminated glass, like a glass for a windshield. In this embodiment, the interlayer film is not removed from the surface after the last layer was coated.

In a an optional process step of this embodiment, a second glass sheet may be provided on the last layer to yield a stack which is either the final laminate which may be directly subjected to a lamination process as known in the art.

### Polyvinyl Acetal

The melts used in accordance with the invention contain one or more polyvinyl acetals. Polyvinyl acetals may differ in polyvinyl alcohol content, degree of acetalisation, residual acetate content, ethylene proportion, molecular weight and/or chain lengths of the aldehyde of the acetal groups.

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde or iso-butyraldehyde are preferably used to obtain n- and/or iso-polyvinylbutyral which are preferentially used in the invention.

The polyvinyl acetals may have a content of polyvinyl acetate groups of 0.1 to 20 mol %, preferably 0.5 to 3 mol %, or 5 to 8 mol %.

The polyvinyl alcohol content of the used polyvinyl acetals may be between 14 - 26 % by weight, 16 - 24 % by weight, 17 - 23 % by weight and preferably between 18 and 21 % by weight.

### Additives

The melts may contain alkali metal ion and/or earth alkali metal ion to adjust their adhesion level to glass (so called Anti-Adhesion Additives). The concentrations given below are based on the final film. It can be advantageous to provide layers with different amount anti-adhesion additives. In such case, the concentrations given below can refer to a particular layer.

As alkali metal ion, potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of the interlayer film. Preferred ranges of alkali metal salt are 0.01 % - 0.1 %; 0.02 - 0.08 %; 0.03 - 0.06 %, each weight % based on the weight of the film.

The film produced with the invention may additionally comprise alkaline earth ions. In a first embodiment of the invention, the film comprises 0 to 100 ppm alkaline earth ions, preferable 20 to 60 ppm.

In addition, the alkaline titer of the film may be higher than 10, higher than 20, higher than 40, higher than 50, higher than 80, higher than 90 and preferred higher than 100, in each case with a maximum value of 500.

In order to avoid haze, the amount of chloride ions and/or nitrate ions and/or sulphate ions in the interlayer film may be reduced to less than 150 ppm, preferably less than 100 ppm, and in particular less than 50 ppm. In the ideal case, the chloride content of the film is less than 10 ppm or even 0 ppm.

The nitrate content of the film is optionally less than 150 ppm, preferably less than 100 ppm, and in particular less than 50 ppm. In the ideal case, the nitrate content of the film is less than 10 ppm or even 0 ppm.

Again optionally, the sulphate content of the film may be less than 150 ppm, preferably less than 100 ppm, and in particular less than 50 ppm. In the ideal case, the sulphate content of the film is less than 10 ppm or even 0 ppm.

### Plasticizer

The melts used in accordance with the invention contain for example 14.0 - 40.0 % by weight, preferably 15.0 - 32.0 % by weight and in particular 26.0 - 30.0 % by weight plasticiser.

As plasticiser, one or more compounds selected from the following groups may be used:
esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
phosphates with aliphatic or aromatic ester alcohols, such as tris(2-ethylhexyl)phosphate (TOF), triethyl phosphate, diphenyl-2-ethylhexyl phosphate, and/or tricresyl phosphate esters of citric acid, succinic acid and/or fumaric acid.

Preferable, 1,2-cyclohexane dicarboxylic acid diisononyl ester (DINCH) or triethylene glycol-bis-2-ethyl hexanoate (3GO or 3G8) are used as plasticiser.

In addition, the melts may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The layers or strings may have the same or a different composition in regard to the nature of the plasticizer, the amount of plasticizer, the nature of the additives or the concentration of the additives .

The method according to the invention may be used produce interlayer films for laminated glass and/or adhesion film for photovoltaic modules.

## Claims

1. A method for producing a film comprising at least two layers comprising at least one polyvinyl actetal and at least one plasticiser by
- providing at least one melt comprising a mixture of at least one polyvinyl actetal and at least one plasticiser
- coating the at least one melt in form of at least two strings parallel and adjacent to each other on a surface to obtain a first layer, wherein the strings are coated at a temperature where they fuse with each other
- coating the at least one melt in form of at least two strings parallel and adjacent to each other on the first layer to obtain a second layer, wherein the strings are coated at a temperature where they fuse with each other and with the adjacent layer;
wherein the strings are produced from the melt by extrusion or 3D printing technique and wherein the film is not extruded in its final shape and thickness.

2. Method according to any of the claim 1 **characterised in that** the layers are provided from strings from at least two melts comprising different polyvinyl actetal and/or different plasticisers.

3. Method according to claim 1 or 2 **characterised in that** the layer film comprises at least one layer provided from a plurality of strings wherein the strings are provided from at least two melts having a different composition.

4. Method according to any of the claims 1 to 3 **characterised in that** in at least one layer, at least two strings provided from different melts are coated successively to be combined to the length of the film.

5. Method according to any of the claims 1 to 4 **characterised in that** the film is removed from the surface.

6. Method according to any of the claims 1 to 5 **characterised in that** the surface is a glass sheet.

7. Method according to claim 6 **characterised in that** the surface is a first glass sheet and the film is covered with a second glass sheet.

## Patentansprüche

1. Verfahren für die Herstellung einer Folie umfassend mindestens zwei Schichten umfassend mindestens ein Polyvinylacetal und mindestens einen Weichmacher durch
- Bereitstellen von mindestens einer Schmelze umfassend eine Mischung von mindestens einem Polyvinylacetal und mindestens einem Weichmacher
- schichtförmiges Aufbringen der mindestens einen Schmelze in Form von mindestens zwei Schnüren parallel und aneinander anliegend auf einer Oberfläche, um eine erste Schicht zu erhalten, wobei die Schnüre schichtförmig bei einer Temperatur aufgebracht werden, bei der sie sich miteinander verschmelzen
- schichtförmiges Aufbringen der mindestens einen Schmelze in Form von mindestens zwei Schnüren parallel und aneinander anliegend auf die erste Schicht, um eine zweite Schicht zu erhalten, wobei die Schnüre schichtförmig bei einer Temperatur aufgebracht werden, bei der sie sich miteinander und mit der anliegenden Schicht verschmelzen;
wobei die Schnüre aus der Schmelze durch Extrusion oder 3D-Drucktechnik hergestellt werden und wobei die Folie nicht in ihrer endgültigen Gestalt und Dicke extrudiert wird.

2. Verfahren nach irgendeinem von Anspruch 1, **dadurch gekennzeichnet, dass** die Schichten aus Schnüren aus mindestens zwei Schmelzen bereitgestellt werden, die verschiedenes Polyvinylacetal und/oder verschiedene Weichmacher umfassen.

3. Verfahren nach Anspruch 1 oder 2, **dadurch gekennzeichnet, dass** die Schichtfolie mindestens eine Schicht umfasst, die aus einer Mehrzahl von Schnüren bereitgestellt wird, wobei die Schnüre aus mindestens zwei Schmelzen bereitgestellt werden, die eine unterschiedliche Zusammensetzung aufweisen.

4. Verfahren nach irgendeinem der Ansprüche 1 bis 3, **dadurch gekennzeichnet, dass** in mindestens einer Schicht mindestens zwei Schnüre, die aus verschiedenen Schmelzen bereitgestellt sind, nacheinander schichtförmig aufgebracht werden, um zu der Länge der Folie kombiniert zu werden.

5. Verfahren nach irgendeinem der Ansprüche 1 bis 4, **dadurch gekennzeichnet, dass** die Folie von der Oberfläche entfernt wird.

6. Verfahren nach irgendeinem der Ansprüche 1 bis 5, **dadurch gekennzeichnet, dass** die Oberfläche eine Glasscheibe ist.

7. Verfahren nach Anspruch 6, **dadurch gekennzeichnet, dass** die Oberfläche eine erste Glasplatte ist und die Folie mit einer zweiten Glasscheibe bedeckt wird.

## Revendications

1. Procédé de production d'un film comprenant au moins deux couches comprenant au moins un acétal de polyvinyle et au moins un plastifiant par
- fourniture d'au moins un produit de fusion comprenant un mélange d'au moins un acétal de polyvinyle et d'au moins un plastifiant
- revêtement de l'au moins un produit de fusion sous forme d'au moins deux cordes parallèles et adjacentes l'une à l'autre sur une surface pour obtenir une première couche, où les cordes sont revêtues à une température où elles fusionnent l'une avec l'autre
- revêtement de l'au moins un produit de fusion sous forme d'au moins deux cordes parallèles et adjacentes l'une à l'autre sur la première couche pour obtenir une seconde couche, où les cordes sont revêtues à une température où elles fusionnent l'une avec l'autre et avec la couche adjacente ;
où les cordes sont produites à partir du produit de fusion par extrusion ou la technique d'impression 3D et où le film n'est pas extrudé dans sa forme et épaisseur finales.

2. Procédé selon l'une quelconque de la revendication 1 **caractérisé en ce que** les couches sont fournies à partir des cordes d'au moins deux produits de fusion comprenant un acétal de polyvinyle différent et/ou des plastifiants différents.

3. Procédé selon la revendication 1 ou 2 **caractérisé en ce que** le film de couche comprend au moins une couche fournie à partir d'une pluralité de cordes où les cordes sont fournies à partir d'au moins deux produits de fusion ayant une composition différente.

4. Procédé selon l'une quelconque de revendications 1 à 3 **caractérisé en ce que** dans au moins une couche, au moins deux cordes fournies à partir de produits de fusion différents sont revêtues successivement pour être combinées à la longueur du film.

5. Procédé selon l'une quelconque de revendications 1 à 4 **caractérisé en ce que** le film est enlevé de la surface.

6. Procédé selon l'une quelconque de revendications 1 à 5 **caractérisé en ce que** la surface est une feuille de verre.

7. Procédé selon la revendication 6 **caractérisé en ce que** la surface est une première feuille de verre et le film est recouvert avec une seconde feuille de verre.
